# FASCICULE DE BREVET EUROPEEN

(11) **EP 2 048 592 B1**
(45) Date de publication et mention de la délivrance du brevet: **21.07.2010**
(21) Numéro de dépôt: 08166401.3
(22) Date de dépôt: 10.10.2008
(51) Int. Cl.: G06F 21/20, G06K 9/00

(54) **Procédé d'authentification biométrique, système d'authentification, programme et terminal correspondants**
Verfahren zur biometrischen Authentifizierung, Authentifizierungssystem, entsprechendes Programm und Endgerät
Biometric authentication method, corresponding authentication system, program and terminal

(30) Priorité: 12.10.2007 FR 0758297
(43) Date de publication de la demande: 15.04.2009
(73) Titulaire: Compagnie Industrielle et Financière d'Ingénierie "Ingenico", 92200 Neuilly sur Seine (FR)
(72) Inventeur: Naccache, David, 75018, Paris (FR)
(74) Mandataire: Bioret, Ludovic

(56) Documents cités:
- WO-A-03/029938
- WO-A-03/077082
- US-A- 6 092 199
- O' SHEA T M ET AL: "Biometric Authentication Management" INTERNET CITATION, [Online] XP002274831 Extrait de l'Internet: URL:http://www.networkcomputing.com/1026/1 026f2.html> [extrait le 2004-03-24]

## Description

### 1. Domaine de l'invention

Le domaine de l'invention est celui de l'authentification d'individus par biométrie.

Plus précisément, l'invention concerne les systèmes d'authentification biométrique regroupant un très grand nombre d'individus.

### 2. Art antérieur

La biométrie est couramment utilisée afin d'identifier et/ou authentifier des individus sur la base de caractéristiques physiques individuelles.

Une telle identification par biométrie, mise en oeuvre par un système d'authentification biométrique, comprend les trois étapes principales suivantes :
- capture d'un échantillon biométrique de référence provenant de l'individu autorisé (par exemple une image de référence d'un individu autorisé) ;
- création d'un fichier de référence, ou « signature de référence » (qui comprend au moins un élément caractéristique de l'image de référence), par un traitement spécifique appliqué à l'échantillon biométrique de référence, puis stockage de ce fichier de référence ;
- vérification dans laquelle, de la même manière que dans les étapes de capture et de création précitées, on réalise une capture d'un échantillon biométrique à comparer provenant de l'individu à authentifier et une création d'un fichier à comparer, ou « signature à comparer », puis une comparaison du fichier de référence au fichier à comparer pour déterminer leur taux de similitude et prendre la décision qui s'impose.

Ainsi, les informations stockées ne sont pas les échantillons biométriques, mais des modèles mathématiques de ces échantillons qui distinguent un échantillon biométrique d'un autre. Ce modèle est appelé une « signature » ou un « gabarit ».

La création d'une signature de référence s'effectue pendant une phase dite d'enrôlement (ou d'apprentissage) qui regroupe les étapes de capture de l'échantillon biométrique de référence, de création et de stockage de la signature de référence et de stockage d'informations sur l'identité de l'individu comme son nom, son prénom, son identifiant (numéro d'identification personnel).

L'authentification d'un individu par biométrie peut notamment se baser sur la mesure (ou capture) d'au moins un des échantillons biométriques suivants, ou une combinaison d'un ou plusieurs des échantillons biométriques suivants :
- son empreinte digitale ;
- son empreinte palmaire (empreinte de la main) ;
- l'empreinte de sa rétine ;
- l'empreinte de son iris ;
- l'empreinte de son visage (la forme du visage) ;
- ...

Un inconvénient de ces systèmes d'authentification biométrique de l'art antérieur réside dans leur lenteur quand ils sont utilisés pour référencer un grand nombre d'individus (par exemple pour contrôler l'accès au métro dans une grande agglomération ou authentifier un utilisateur d'une carte bancaire).

En effet, la durée de l'étape de vérification, pendant laquelle la décision d'authentification proprement dite est prise, dépend du nombre d'individus référencés dans le système d'authentification. Plus le nombre d'individus référencés est important, et plus le nombre de comparaisons potentielles à effectuer pour déterminer ou non l'authentification d'un individu est important.

Ainsi, plus le nombre d'individus référencés est grand, et plus le système est lent.

Une solution, divulguée par le document WO 03/077082 A, consiste en la répartition des signatures de référence dans plusieurs bases de données et en la fourniture lors d'une recherche d'un indice, identifiant la base de données contenant la signature de référence. Ceci permet de restreindre le champ de la recherche et donc d'accélérer la recherche.

Une autre solution de l'art antérieur, divulgué par le document WO 03/029938 A, consiste à mémoriser au niveau d'un ordinateur local les signatures biométriques déjà authentifiées depuis cet ordinateur et à comparer en premier lieu les signatures biométriques à authentifier à celles mémorisées. Cette solution permet ainsi d'accélérer l'authentification, pour les utilisateurs déjà référencés sur cet l'ordinateur.

Un autre inconvénient de ces systèmes d'authentification biométrique de l'art antérieur réside dans le risque croissant d'erreurs d'authentification en fonction du nombre d'individus référencés.

En effet, plus le nombre d'individus référencés est important, et plus le système est susceptible de référencer plusieurs informations biométriques proches, correspondant chacune à des individus différents. Ensuite, lors de la phase d'authentification, un tel système présente un plus grand risque d'erreurs d'authentification, dues à cette proximité des informations biométriques référencées pour des individus différents.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique d'authentification biométrique qui soit rapide et fiable, dans le cas d'un système référençant un très grand nombre d'individus.

L'invention a ainsi pour objectif de fournir une telle technique qui soit également ergonomique pour l'utilisateur.

Un autre objectif de l'invention est de fournir une telle technique qui soit peu coûteuse et facile à mettre en oeuvre.

### 4. Exposé de l'invention

L'invention propose une solution nouvelle qui ne présente pas l'ensemble de ces inconvénients de l'art antérieur, sous la forme d'un procédé d'authentification biométrique d'un individu à authentifier parmi une très grande quantité d'individus auprès d'un système d'authentification stockant un ensemble d'informations de référence associées chacune à un desdits individus, lesdites informations de référence étant distribuées dans une pluralité de sous-bases de données selon la revendication 1.

Selon l'invention, lesdites informations de référence sont distribuées dans une pluralité de sous-bases de données, et ledit individu à authentifier fournit, en complément de ladite information biométrique, un identifiant formant information d'adressage, désignant au moins une desdites sous-bases de données susceptibles de contenir l'information de référence représentative dudit individu à authentifier, de façon que ladite étape de recherche soit effectuée sur un sous-ensemble dudit ensemble d'informations de référence, identifié par ladite information d'adressage.

Ainsi, l'invention repose sur une approche nouvelle et inventive de l'authentification biométrique dans un système référençant un très grand nombre (par exemple des millions) d'individus, selon laquelle les informations de référence associées aux individus du système sont réparties dans une pluralité de sous-bases de données et l'authentification d'un individu se fait sur une de ces sous-bases de données, identifiée par une information d'adressage qui lui est propre fournie par l'individu à authentifier, en complément de son information biométrique.

Cette information d'adressage est par exemple, dans un mode de réalisation, un code d'identification à plusieurs chiffres, délivré par l'individu avant de fournir son information biométrique d'authentification.

Cette approche permet une identification rapide d'un individu, y compris dans un système comprenant un très grand nombre d'individus référencés, par le découpage de l'ensemble des informations de référence en plusieurs sous-ensembles.

De plus, le procédé selon l'invention permet notamment d'associer à chaque individu un code propre, court, par exemple n'excédant pas quatre chiffres. Cette approche ne doit pas être confondue avec les systèmes allouant à chaque utilisateur un identifiant qui lui est propre (ce qui, dans le cas d'un système référençant plus d'un million d'individus, supposerait un identifiant propre à chaque individu devant comprendre au minimum sept chiffres. En effet, une telle longueur est peu ergonomique, et génératrice d'erreurs de saisie et d'oubli). Ceci est rendu possible, selon l'invention, par l'utilisation d'une pluralité de sous-bases pour référencer les individus du système.

Selon une caractéristique particulière de l'invention, lesdites informations biométriques appartiennent au groupe comprenant :
- les empreintes digitales ;
- les empreintes palmaires ;
- les empreintes de rétine ;
- les empreintes d'iris ;
- les formes de visage ;
- les combinaisons desdites informations biométriques précitées.

Ainsi, le procédé selon l'invention permet de répartir judicieusement et efficacement les informations de référence des individus afin d'éviter les "collisions" ou les risques d'erreur dues au référencement de plusieurs individus présentant des caractéristiques biométriques proches dans une même sous-base. De telles collisions pourraient entraîner notamment, au moment de l'authentification proprement dite de l'individu, des erreurs d'authentification pour un individu correctement référencé par le système.

En effet, selon l'invention, l'ajout d'une nouvelle information de référence d'un nouvel individu dans le système est effectué en fonction des informations de référence déjà stockées. Ainsi, la sous-base dans laquelle est ajoutée la nouvelle référence est choisie de telle manière que la nouvelle information de référence soit suffisamment distante des autres informations de référence stockées dans cette sous-base.

Ce calcul de distance entre la nouvelle information de référence et les informations déjà stockées est connu par l'homme du métier dans le domaine de l'authentification biométrique.

Selon une mise en oeuvre particulière, ladite authentification tient compte de ladite information biométrique d'authentification et, au moins en cas de besoin, d'une information biométrique,

qui correspond elle aussi à une caractéristique biométrique de l'individu, et peut être utilisée pour sécuriser (confirmer ou infirmer) l'authentification basée sur l'information biométrique d'authentification, de façon systématique, ou seulement en cas de doute sur la première authentification.

Ainsi, en fonction de certains critères prédéterminés, le procédé selon l'invention comprend deux étapes d'authentification. Dans ce cas, deux informations de référence sont associées à chaque individu référencé dans le système et stockées dans la même base de données.

En effet, la capture d'une information biométrique est soumise à différents aléas, connus du domaine de la biométrie (coupure sur un doigt pour une empreinte digitale, fort bruit ambiant pour une empreinte vocale ...), et entraîne donc des différences, parfois notables, entre plusieurs informations biométriques délivrées par un même individu.

Le procédé selon l'invention prend donc en considération ses risques d'erreurs de calcul, en offrant la possibilité, en cas de première étape d'authentification infructueuse, d'effectuer une seconde étape d'authentification.

Un autre aspect de l'invention concerne également un système d'authentification biométrique conforme à la revendication 3.

Un tel système est notamment adapté à mettre en oeuvre le procédé d'authentification décrit précédemment.

Un tel système peut notamment être un système d'authentification permettant l'accès à un transport en commun, ou un système d'authentification d'un organisme bancaire.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'authentification biométrique décrit précédemment.

Enfin, l'invention concerne un terminal destiné à l'authentification biométrique d'un individu à authentifier parmi une très grande quantité d'individus auprès d'un système d'authentification stockant un ensemble d'informations de référence associées chacune à un desdits individus, lesdites informations de référence étant distribuées dans une pluralité de sous-bases de données.

Selon l'invention, un tel terminal comprend :
- des moyens de capture d'une information biométrique d'authentification dudit individu à authentifier,
de façon à ce que l'enregistrement d'une information de référence représentative d'un nouvel individu soit effectué par ledit système d'authentification et comprenne une sélection de la sous-base la mieux adaptée pour le stockage de ladite information de référence à ajouter, en fonction d'un critère de maximisation d'une distance par rapport aux informations de référence déjà présentes dans ladite sous-base, et à ce que la recherche de ladite information de référence correspondant à ladite information biométrique d'authentification dudit individu à authentifier soit effectuée par ledit système d'authentification sur un sous-ensemble dudit ensemble d'informations de référence, identifié par ladite information d'adressage.

Un tel terminal est notamment apte à mettre en oeuvre les étapes du procédé d'authentification décrit précédemment se déroulant dans le terminal.

Un tel terminal peut notamment être un terminal de paiement, un terminal permettant l'accès à un bâtiment ou à un transport en commun (métro) ...

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes du procédé d'authentification biométrique selon l'invention ;

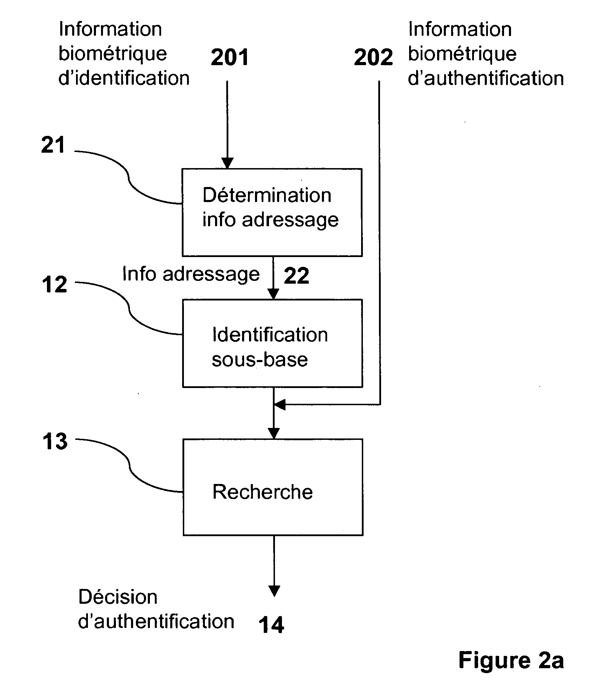

- la figure 2a illustre les étapes d'un procédé d'authentification ;

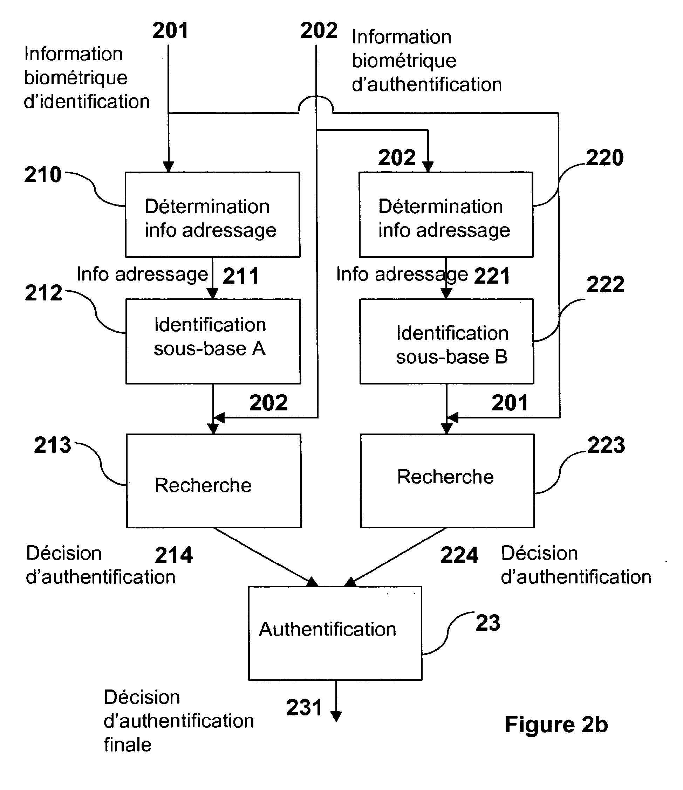

- la figure 2b illustre une variante du procédé d'authentification selon la figure 2a ;
- la figure 3 présente les étapes d'un autre procédé d'authentification.

### 6. Description d'un mode de réalisation de l'invention

### 6.1 Principe général

Le principe général de l'invention repose sur la répartition, dans une pluralité de sous-bases de données, de l'ensemble des informations biométriques relatives aux individus référencés dans un système d'authentification biométrique, de manière à éviter les problèmes de lenteur et de collision inhérents aux systèmes d'authentification référençant un très grand nombre d'individus.

De tels systèmes peuvent être utilisés par exemple pour contrôler l'accès au métro dans une grande agglomération, et ainsi référencer un très grand nombre d'utilisateurs.

On considère par la suite, pour illustrer le procédé selon l'invention, un tel système permettant de contrôler, par authentification biométrique, l'accès au métro en dispensant les usagers du port d'un titre de transport (sous la forme de billet, carte d'abonnement ou autre). Dans ce cas, un usager souhaitant accéder au métro est authentifié grâce à une ou plusieurs caractéristiques biométriques.

Selon l'invention, afin d'éviter une lenteur trop importante du système, et de permettre aux usagers référencés de ne pas être ralentis par l'authentification biométrique et donc d'accéder rapidement au métro, les informations de référence de tous les usagers sont réparties entre plusieurs bases de données, appelées sous-bases, chacune étant désignée par un numéro, encore appelé information d'adressage.

Cette information d'adressage permet par la suite d'orienter vers la sous-base ainsi désignée la recherche de l'information de référence en vue de l'authentification de l'usager, ou de l'individu à authentifier.

Ainsi, au lieu de vérifier l'authenticité d'un individu parmi l'ensemble des individus référencés, le procédé selon l'invention permet de vérifier l'authenticité d'un individu dans un sous-ensemble d'individus référencés, réduisant ainsi la durée de l'authentification.

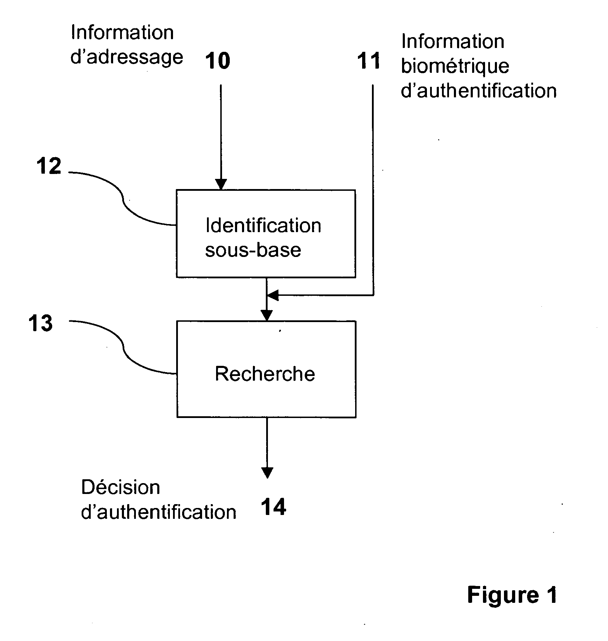

On présente maintenant, en relation avec la figure 1, les principales étapes du procédé d'authentification biométrique selon l'invention.

Au moment de l'accès au métro, un usager doit fournir deux informations par l'interface du système d'authentification :
- une information d'adressage 10 ;
- une information biométrique d'authentification 11.

L'information d'adressage 10 est utilisée lors d'une étape 12 d'identification d'une sous-base, laquelle servira ensuite à la recherche d'une information de référence correspondant à l'usager à authentifier.

### 6.2 premier mode de réalisation

Dans un premier mode de réalisation de l'invention, cette information d'adressage correspond directement à l'indice d'une sous-base de données, par exemple sous la forme d'un code à 4 chiffres.

Une fois la sous-base identifiée, l'authentification proprement dite a lieu, lors d'une phase de recherche 13, qui tient compte de l'information biométrique 11 délivrée par l'individu, pour délivrer une décision d'authentification 14.

L'information biométrique d'authentification 11 correspond à un échantillon biométrique "simple" de l'individu à authentifier, tel que une empreinte digitale, une empreinte palmaire, une empreinte de rétine, une empreinte d'iris, une forme de visage, etc, ou à une combinaison de plusieurs de ces échantillons "simples", par exemple une combinaison d'une empreinte digitale et d'une empreinte d'iris.

La phase de recherche 13 est constituée de manière classique d'au moins deux étapes : une première étape consistant à déterminer une "signature" biométrique de l'usager à authentifier, à partir de l'information biométrique d'authentification délivrée, et une deuxième étape consistant à comparer cette "signature" biométrique avec les signatures, ou informations de référence contenues dans la sous-base de données préalablement identifiée, en vue de délivrer une décision d'authentification.

La première étape correspond à l'application d'un traitement spécifique classique à l'échantillon biométrique, de manière à obtenir une signature pouvant être ensuite comparée à d'autres informations du même type. Cette signature est obtenue par des algorithmes de création de signature, connus en soi dans le domaine de la biométrie.

La seconde étape effectue des comparaisons successives de la signature obtenue lors de l'étape précédente, avec chacune des informations de référence, ou signatures de référence stockées dans la sous-base concernée. En fonction de critères prédéterminés, une décision d'authentification est délivrée, positive quand une signature de référence correspond à la signature obtenue, négative quand aucune des signatures de référence contenue dans la sous-base ne correspond.

Ainsi, on comprend aisément que cette seconde étape d'authentification est plus rapide dans le procédé selon l'invention, car le nombre maximum de comparaisons qu'elle peut effectuer correspond au nombre de signatures stockées dans la sous-base, et non au nombre total de signatures stockées dans le système d'authentification.

De plus, un autre avantage du procédé d'authentification de l'invention réside dans la répartition elle-même des informations de référence entre les différentes sous-bases.

En effet, il est possible, de minimiser les risques de collision, c'est-à-dire les risques d'avoir, dans une même base de données, des informations de références proches susceptibles d'être considérées comme identiques par un système d'authentification. Cet avantage est directement lié à l'utilisation d'une pluralité de sous-bases contenant l'ensemble des informations de référence et au choix de la sous-base au moment de l'ajout d'un nouvel individu à référencer.

Plus un système d'authentification comprend d'individus référencés, et plus la probabilité augmente de référencer des individus ayant des caractéristiques biométriques proches, pouvant être considérées comme identiques lors d'une authentification.

Or, le procédé selon l'invention permet de référencer dans des sous-bases différentes des individus ayant des caractéristiques biométriques proches, et permet ainsi de minimiser les risques d'erreur d'authentification liées à des informations de référence proches.

Ainsi, le procédé selon l'invention comprend une phase particulière d'ajout d'un nouvel individu à référencer, permettant de déterminer la sous-base la plus appropriée pour stocker l'information de référence de l'individu à ajouter, et ensuite de fournir à cet individu l'information d'adressage correspondant à l'indice de la sous-base choisie.

Le choix de cette sous-base peut notamment tenir compte des informations de références déjà contenues dans chacune des sous-bases du système d'authentification.

Ainsi, le procédé selon l'invention effectue d'abord une recherche, dans chaque sous-base, de l'information de référence considérée comme la plus proche de celle à ajouter.

Par exemple, un critère de proximité (calcul d'une distance), défini au préalable, est appliqué à chacune des informations de référence de chacune des sous-bases, délivrant pour chaque sous-base un résultat positif ou négatif, indiquant si au moins une information de référence considérée comme proche de celle à ajouter a été trouvée ou non.

Ce critère de proximité peut par exemple consister en un certain nombre de points de concordance à vérifier, au delà duquel une information de référence est considérée comme proche de celle à ajouter.

Ensuite, si au moins une sous-base ne comporte pas d'information de référence considérée comme proche, alors l'information de référence du nouvel individu est ajoutée à cette sous-base. Préférentiellement, on choisit la sous-base maximisant la distance avec l'ensemble des références déjà stockées.

Par contre, si toutes les sous-bases contiennent au moins une information de référence jugée proche, alors on peut soit appliquer un critère de proximité plus large et refaire le calcul du choix de la sous-base, soit créer une nouvelle sous-base de données afin d'y référencer ce nouvel individu.

Une fois la sous-base choisie, une information d'adressage correspondante est fournie à l'individu ajouté dans le système d'authentification, par exemple sous la forme d'un code à quatre chiffres correspondant à l'indice de la sous-base dans le système.

Comme indiqué ci-dessus, le procédé selon l'invention peut utiliser deux informations délivrées par l'utilisateur : une information d'adressage 10 et une information biométrique 11 (figure 1).

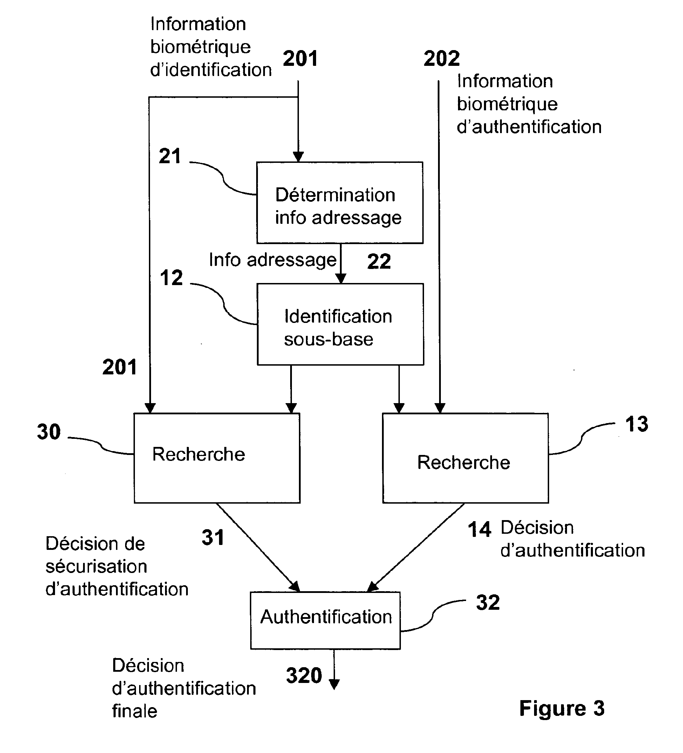

Dans un autre exemple présenté en figure 3, l'individu à authentifier délivre deux informations biométriques 201, et 202. Ces deux informations peuvent être issues d'une même capture (par exemple empreinte palmaire et empreinte digitale), ou de deux captures distinctes.

Les étapes suivantes sont les mêmes que décrites précédemment, c'est-à-dire une étape 12 d'identification de la sous-base à partir de l'information d'adressage 22, suivie d'une étape de recherche 13, afin de délivrer une décision d'authentification 14.

En effet, l'échantillon biométrique délivré par l'utilisateur est soumis à des aléas bien connus dans le domaine de la biométrie (notamment au moment de la capture de l'échantillon, par exemple coupure sur un doigt pour une empreinte digitale, fort bruit ambiant pour une empreinte vocale ...).

La figure 3 illustre un exemple de mise en oeuvre d'un procédé présentant des étapes de sécurisation de l'authentification, en tenant compte de plusieurs échantillons biométriques délivrés par l'individu à authentifier.

Comme précédemment, le procédé utilise ensuite, lors d'une étape 13 de recherche, le deuxième échantillon biométrique 202 (information biométrique d'authentification) fourni par l'utilisateur, pour délivrer une décision d'authentification 14.

De plus, le premier échantillon biométrique 201 est utilisé dans une deuxième étape de recherche 30, délivrant elle-même une décision d'authentification, appelée décision de sécurisation d'authentification 31.

Ainsi, la sous-base désignée par l'information d'adressage contient à la fois des informations de référence du type correspondant à la signature issue du premier échantillon biométrique et des informations de référence du type correspondant à la signature issue du deuxième échantillon biométrique.

Les deux décisions 14 et 31 sont ensuite utilisées dans une étape 32 pour délivrer la décision finale d'authentification 320.

Ainsi, si la décision d'authentification 14 et la décision de sécurisation d'authentification sont positives, le procédé selon cette variante délivrera une décision finale positive. Si les deux décisions 14 et 32 sont négatives, ou si l'une des deux décisions est négatives, le procédé délivrera une décision finale négative.

La deuxième étape de recherche 30 peut être facultative, et mise en oeuvre uniquement en cas de doute sur la première décision 14.

## Revendications

1. Procédé d'authentification biométrique d'un individu à authentifier parmi une très grande quantité d'individus auprès d'un système d'authentification stockant un ensemble d'informations de référence associées chacune à un desdits individus, lesdites informations de référence étant distribuées dans une pluralité de sous-bases de données, comprenant :
- une phase d'enregistrement d'une information de référence représentative d'un nouvel individu, sous la forme d'une signature biométrique obtenue à l'aide d'un algorithme de création de signature, dans une desdites sous-bases de données, et
- une phase d'authentification comprenant les étapes suivantes :
○ fourniture par ledit individu à authentifier d'une information biométrique d'authentification (11) et d'un identifiant formant information d'adressage (10), désignant au moins une desdites sous-bases de données susceptibles de contenir l'information de référence représentative dudit individu à authentifier,
○ recherche (13) parmi lesdites informations de référence stockées par ledit système d'authentification, d'une information de référence correspondant audit individu à authentifier, en fonction de ladite information biométrique d'authentification, ladite étape de recherche étant effectuée sur un sous-ensemble dudit ensemble d'informations de référence, identifié par ladite information d'adressage,
**caractérisé en ce que** ladite phase d'enregistrement comprend les étapes suivantes :
- sélection de la sous-base la mieux adaptée pour le stockage de ladite information de référence, en fonction d'un critère de maximisation d'une distance de ladite information de référence par rapport aux autres informations de référence déjà présentes dans ladite sous-base ;
- fourniture audit nouvel individu dudit identifiant formant information d'adressage, correspondant à un indice de la sous-base choisie.

2. Procédé d'authentification biométrique selon la revendication 1, **caractérisé en ce que** lesdites informations biométriques appartiennent au groupe comprenant :
- les empreintes digitales ;
- les empreintes palmaires ;
- les empreintes de rétine ;
- les empreintes d'iris ;
- les formes de visage ;
- les combinaisons desdites informations biométriques précitées.

3. Système d'authentification biométrique d'un individu à authentifier parmi une très grande quantité d'individus comprenant des moyens de stockage d'un ensemble d'informations de référence associées chacune à un desdits individus, et des moyens de distribution desdites informations de référence dans une pluralité de sous-bases de données, comprenant :
- des moyens d'enregistrement d'une information de référence représentative d'un nouvel individu, sous la forme d'une signature biométrique obtenue à l'aide d'un algorithme de création de signature, dans une desdites sous-bases de données, et
- des moyens d'authentification comprenant :
○ des moyens de fourniture par ledit individu à authentifier d'une information biométrique d'authentification (11) et d'un identifiant formant information d'adressage (10), désignant au moins une desdites sous-bases de données susceptibles de contenir l'information de référence représentative dudit individu à authentifier ;
○ des moyens de recherche parmi lesdites informations de référence stockées par ledit système d'authentification, d'une information de référence correspondant audit individu à authentifier, en fonction de ladite information biométrique d'authentification (11), ladite recherche étant effectuée sur un sous-ensemble dudit ensemble d'informations de référence, identifié par ladite information d'adressage (10),
**caractérisé en ce qu'**il comprend, dans lesdits moyens d'enregistrement :
- des moyens de sélection de la sous-base la mieux adaptée pour le stockage de ladite information de référence à ajouter, en fonction d'un critère de maximisation d'une distance de ladite information de référence par rapport aux autres informations de référence déjà présentes dans ladite sous-base,
- des moyens de fourniture audit nouvel individu dudit identifiant formant information d'adressage, correspondant à un indice de la sous-base choisie.

4. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'authentification biométrique selon l'une au moins des revendications 1 ou 2.

## Claims

1. Biometric authentication method of an individual to be authenticated amongst a very large quantity of individuals with an authentication system storing a set of reference information items each associated with one of said individuals, said reference information being distributed across a plurality of sub-databases,
comprising:
- a phase of recording reference information representative of a new individual, in the form of a biometric signature obtained using a signature creation algorithm, in one of said sub-databases, and
- a phase of authentication comprising the following steps:
- provision by said individual to be authenticated of authentication biometric information (11) and of an identifier forming addressing information (10), designating at least one of said sub-databases likely to contain the reference information representative of said individual to be authenticated;
- searching (13) amongst said reference information stored by said authentication system, for reference information corresponding to said individual to be authenticated, according to said authentication biometric information, said searching stage being carried out on a subset of said set of reference information, identified by said addressing information,
**characterised in that** said recording phase comprises the following steps:
- selecting the sub-database that is best adapted to store said reference information, according to a criterion of maximising a distance of said reference information in relation to the other reference information that is already present in said sub-database,
- supplying to said new individual said identifier forming addressing information, corresponding to an index of the chosen sub-database.

2. Biometric authentication method set forth in claim 1, **characterised in that** said biometric information belongs to the group comprising:
- fingerprints;
- palm prints;
- retina prints;
- iris prints;
- facial shapes;
- combinations of said aforementioned biometric information.

3. Biometric authentication system of an individual to be authenticated amongst a very large quantity of individuals, comprising means for storing a set of reference information items each associated with one of said individuals, and means for distributing said reference information in a plurality of sub-databases, and comprising:
- means for recording reference information representative of a new individual, in the form of a biometric signature obtained using a signature creation algorithm, in one of said sub-databases, and
- means for authentication comprising:
- means for providing, by said individual to be authenticated, authentication biometric information (11) and an identifier forming addressing information (10), designating at least one of said sub-databases likely to contain the reference information representative of said individual to be authenticated;
- means for searching amongst said reference information stored by said biometric authentication system, reference information corresponding to said individual to be authenticated, according to said authentication biometric information (11), said searching being carried out on a subset of said set of reference information, identified by said addressing information (10),
**characterised in that** said system comprises, in said means for recording reference information:
- means for selecting the sub-database that is best adapted to store said reference information to be added, according to a criterion of maximising a distance of said reference information in relation to the other reference information that is already present in said sub-database,
- means for supplying to said new individual said identifier forming addressing information, corresponding to an index of the chosen sub-database.

4. Computer program product that can be downloaded from a communication network and/or recorded on a medium that can be read by computer and/or executed by a processor, **characterised in that** it comprises programming code instructions for the implementation of the biometric authentication method according to at least one of claims 1 or 2.

## Patentansprüche

1. Verfahren zur biometrischen Authentifizierung eines Individuums, das unter einer sehr großen Zahl von Individuen authentifiziert werden soll, unter Anwendung eines Authentifizierungssystems, das eine Menge von Referenzinformationen speichert, die jeweils einem der besagten Individuen zugeordnet sind, wobei die besagten Referenzinformationen unter einer Vielzahl untergeordneter Datenbänke verteilt sind, und folgendes umfassen:
- eine Phase der Registrierung einer für ein neues Individuum repräsentativen Referenzinformation in einer der besagten untergeordneten Datenbänke, in Form einer biometrischen Signatur, die mit Hilfe eines Algorithmus für das Erzeugen von Signaturen erhalten wird und,
- eine Authentifizierungsphase, welche die folgenden Schritte umfasst:
○ Durch das besagte zu authentifizierende Individuum Bereitstellen einer biometrischen Authentifizierungsinformation (11) und eines Identifizierungsmerkmals, das eine Adressierungsinformation (10) bildet, die mindestens eine der besagten untergeordneten Datenbänke bezeichnet, welche die für das besagte zu authentifizierende Individuum repräsentative Referenzinformation enthalten könnte,
○ Suche (13) unter den besagten, vom erwähnten Authentifizierungssystem gespeicherten Referenzinformationen, einer dem besagten zu authentifizierenden Individuum entsprechenden Referenzinformation, als Funktion der besagten biometrischen Authentifizierungsinformation, wobei der besagte Suchschritt über eine untergeordnete Menge der besagten Menge von Referenzinformationen durchgeführt wird, die von der besagten Adressierungsinformation identifiziert wird,
**dadurch gekennzeichnet, dass** die besagte Registrierungsphase die folgenden Schritte umfasst:
- Auswahl der untergeordneten Datenbank, die am besten zum Speichern der besagten Referenzinformation geeignet ist, als Funktion eines Kriteriums zur Maximierung eines Abstandes der besagten Referenzinformation im Verhältnis zu den anderen Referenzinformationen, die sich bereits in der besagten untergeordneten Datenbank befinden;
- Zuweisen der besagten Identifizierung, welche eine Adressierungsinformation bildet und einem Index der gewählten untergeordneten Datenbank entspricht, dem besagten neuen Individuum.

2. Verfahren zur biometrischen Authentifizierung nach Anspruch 1, **dadurch gekennzeichnet, dass** die besagten biometrischen Informationen der Folgendes umfassenden Gruppe angehören:
- Fingerabdrücke;
- Handflächenabdrücke;
- Netzhautabbildungen;
- Irisabbildungen;
- Gesichtsformen;
- Kombinationen der oben erwähnten besagten biometrischen Informationen.

3. System zur biometrischen Authentifizierung eines Individuums, das unter einer sehr großen Zahl von Individuen authentifiziert werden soll, das über Speichermittel für eine Menge von Referenzinformationen, die jeweils einem der besagten Individuen zugeordnet sind sowie über Mittel zum Verteilen der besagten Referenzinformationen über eine Vielzahl von untergeordneten Datenbänken verfügt, umfassend:
- Mittel zum Registrieren einer für ein neues Individuum repräsentativen Referenzinformation in einer der besagten untergeordneten Datenbänke, in Form einer biometrischen Signatur, die mit Hilfe eines Algorithmus für das Erzeugen von Signaturen erhalten wird und,
- Mittel zum Authentifizieren, die folgendes umfassen:
○ Mittel zum Bereitstellen durch das besagte zu authentifizierende Individuum einer biometrischen Authentifizierungsinformation (11) und eines Identifizierungsmerkmals, das eine Adressierungsinformation (10) bildet, die mindestens eine der besagten untergeordneten Datenbänke bezeichnet, welche die für das besagte zu authentifizierende Individuum repräsentative Referenzinformation enthalten könnte,
○ Mittel zum Suchen unter den besagten, vom besagten Authentifizierungssystem gespeicherten Referenzinformationen, einer dem besagten zu authentifizierenden Individuum entsprechenden Referenzinformation als Funktion der besagten biometrischen Authentifizierungsinformation (11), wobei das besagte Suchen über eine untergeordnete Menge der besagten Menge von Referenzinformationen durchgeführt wird, die von der besagten Adressierungsinformation (10) identifiziert wird,
**dadurch gekennzeichnet, dass** es unter den besagten Registrierungsmitteln folgendes umfasst:
- Mittel zur Auswahl der untergeordneten Datenbank, die am besten zum Speichern der besagten Referenzinformation geeignet ist, als Funktion eines Kriteriums zur Maximierung eines Abstandes der besagten Referenzinformation im Verhältnis zu den anderen Referenzinformationen, die sich bereits in der besagten untergeordneten Datenbank befinden;
- Mittel zum Zuweisen dem besagten neuen Individuum der besagten Identifizierung, welche eine Adressierungsinformation bildet und einem Index der gewählten untergeordneten Datenbank entspricht.

4. Softwareprodukt, das aus einem Kommunikationsnetzwerk heruntergeladen werden kann und/oder auf einem von einem Rechner lesbaren Datenträger gespeichert ist und/oder von einem Prozessor ausgeführt werden kann, **dadurch gekennzeichnet, dass** es Programmcode-Anweisungen zum Anwenden des biometrischen Authentifizierungsverfahrens nach mindestens einem der Ansprüche 1 oder 2 enthält.
